Europäisches Patentamt

**European Patent Office**

Office européen des brevets

(11) Publication number: **0 346 106**
**A1**

# EUROPEAN PATENT APPLICATION

(21) Application number: **89305769.5**

(22) Date of filing: **07.06.89**

(51) Int. Cl.⁴: **B 60 C 9/20**
**B 60 C 3/04**

(30) Priority: **07.06.88 JP 140704/88**

(43) Date of publication of application:
**13.12.89 Bulletin 89/50**

(84) Designated Contracting States: **DE FR GB**

(71) Applicant: **SUMITOMO RUBBER INDUSTRIES LIMITED**
**No. 1-1, Tsutsui-cho 1-chome**
**Chuo-ku Kobe-shi Hyogo 651 (JP)**

(72) Inventor: **Takehara, Kenji**
**5-208 Honjyocho, 1-chome Higashi Nada-ku**
**Kobe-shi Hyogo-ken (JP)**

(74) Representative: **Stewart, Charles Geoffrey**
**SP TYRES UK LIMITED Tyre Technical Division**
**Fort Dunlop Erdington Birmingham B24 9QT (GB)**

(54) Pneumatic tyre.

(57) A pneumatic tyre having a uniformed ground pressure distribution in which the tyre has an inner band (5) composed of extensible organic fibre cords arranged substantially parallel to the tyre equator (C) and disposed between the carcass (3) and the belt (4) with the axially outer edge (d) of the inner band (5) and the outer edge (a) of the belt ply (4A) having the largest width being substantially aligned and the tread face comprises an internal arc portion (T1) with a radius of curvature TR1 and external arc portions (T2) each with a radius of curvature TR2, wherein the ratio TR2/TR1 is in a range from 0.15 to 0.45 when the tyre is mounted on its regular rim (R) and inflated to 5% of its standard internal pressure, and the boundary point P of the internal arc portion (T1) and each external arc portion (T2) is located between the axially inner edge (f) of the inner band (5) and the axially outward start point of the overlap area where at least two belt-plies overlap in the axial direction of the tyre.

FIG.1

EP 0 346 106 A1

**Description**

## PNEUMATIC TYRE

The present invention relates to a pneumatic tyre, in which high speed durability and steering stability are improved and also the wear resistance is increased.

With the spread of expressway networks and the resultant increases in running speeds of vehicles especially cars, radial tyres having a steel cord belt disposed radially outside a radial carcass have become very widely used.

In such a radial tyre, however, when running at high speed, the centrifugal force caused by the high speed rotation sometimes lifts the belt and causes separation of the belt edges from the surrounding rubber. Especially when cut-end plies are used for the belt, the above-mentioned rubber separation is aggravated by any poor adhesion between the cut-ends and the rubber.

In order to prevent the rubber separation at the edges of the belt and thus improve high speed durability (as shown in Figs.4 to 8) various means have been proposed. In Fig.4, an edge band B made of organic fibre cords is disposed on the upper surface of the edge portion of the belt A. In Fig.5, two layers of edge bands B are used. In Fig.6, a full band C extending over the entire width of the belt A is disposed in addition to the edge bands B. In Fig.7, only a full band C extending over the entire width of the belt A is provided. Finally, in Fig.8, two layers are provided each being of full width bands C extend over the entire width of the belt A.

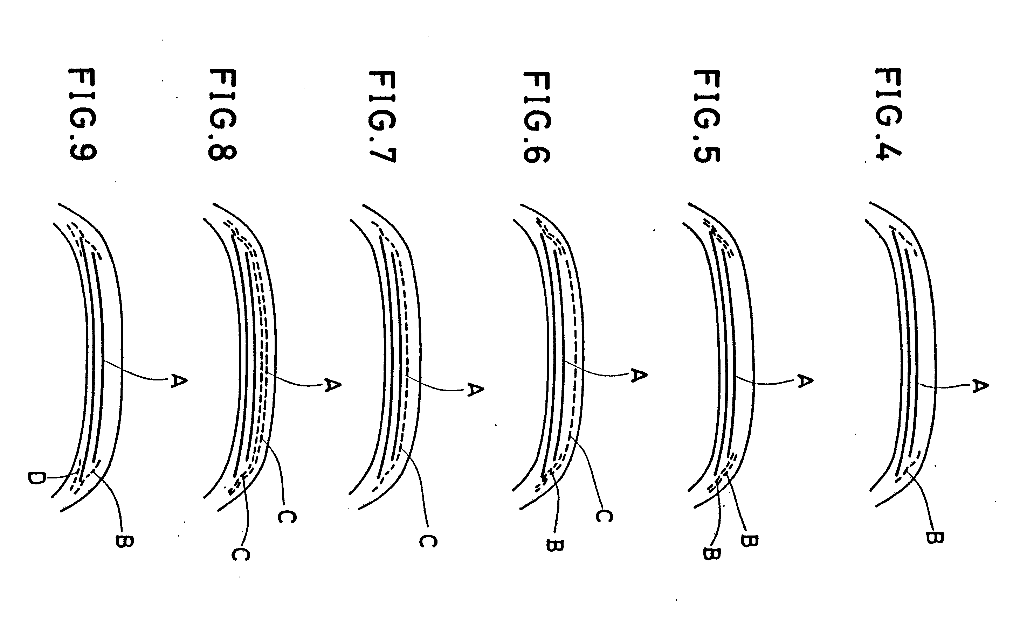

The resultant high speed durability of the tyre shown in Fig.5 is superior to the one shown in Fig.4 having a single layer of edge band B.

Furthermore, the tyre shown in Fig.6 having both the edge bands B and a full band C extending over the entire width is superior in high speed durability to the one shown in Fig.7 provided with a single layer of full band C.

In the tyre shown in Fig.5 having two layers of the edge bands B, however, there is a difference in stiffness between the tyre crown and the tyre shoulders, (i.e. the belt edge portions) and this difference causes uneven distribution of ground pressure on the tread. As a result the steering stability, particularly steering stability at high speed is deteriorated and uneven wear tends to occur.

In the tyre shown in Fig.8, using two layers of full width bands C, once again steering stability at high speed is impaired.

The tyre shown in Fig.7 has a similar problem.

Then again in the proposal of Japanese Patent Application KOKAI No. 58.61005, as shown in Fig.9, an edge band D is disposed between the carcass and the belt A in addition to an edge band B disposed radially outside the belt A. In this tyre, however, the upper and lower edge bands B and D are inclined largely at 8 to 15 degrees in reverse directions with respect to the tyre equator, and with such a construction, the necessary tension of the bands in the circumferential direction of the tyre cannot be obtained. Therefore, such edge bands cannot work effectively as tensile members.

On the other hand, a reduction in uneven wear and an improvement in wear resistance are required characteristics together with good steering stability and high speed durability. To give these properties it is preferable to even out the distribution of ground pressure on the tread face.

The above-mentioned edge bands, however, tend to make uneven the distribution of ground pressure. The edge bands increase the stiffness of the tyre shoulder portions, and accordingly the amount of expansion due to inflation at the shoulder portions is relatively reduced in comparison with the crown portion. As a result, the ground pressure is higher in the crown portion.

It is an object of the present invention to provide a pneumatic tyre, in which rubber separation at the belt edges is effectively prevented to enhance the high speed durability while maintaining steering stability at high speed, and in which the ground pressure distribution is unified to improve wear resistance.

According to one aspect of the present invention, a pneumatic tyre has a tread portion, a pair of sidewall portions extending radially inwardly one from each edge of the tread portion, and a bead portion located at the radially inner end of each sidewall portion and having a bead core extending therethrough, a toroidal carcass turned up around the bead cores to secure both edges thereof, a belt composed of plural plies of steel cords disposed radially outside the carcass, characterised by an inner band composed of extensible organic fibre cords arranged substantially parallel to the tyre equator and disposed between the carcass and the belt with the axially outer edge of the inner band and the axially outer edge of the outer edge of the belt ply having a largest width being substantially aligned, the tread portion is provided with a tread face comprising an internal arc portion having a radius of curvature defining a tread crown and external arc portions each having a radius of curvature TR2 defining tread shoulders, the ratio TR2/TR1 of the radius of curvature TR2 to the radius of curvature TR1 being in a range from 0.15 to 0.45 when the tyre is mounted on a regular rim and inflated to 5% of the standard internal pressure, boundary points between the internal arc portion and each external arc portion located between the axially inner edge of the inner band and the axially outward start point of the overlap area where at least two belt plies overlap in the axial direction of the tyre.

An embodiment of the present invention will now be described referring to the drawings, in which:-

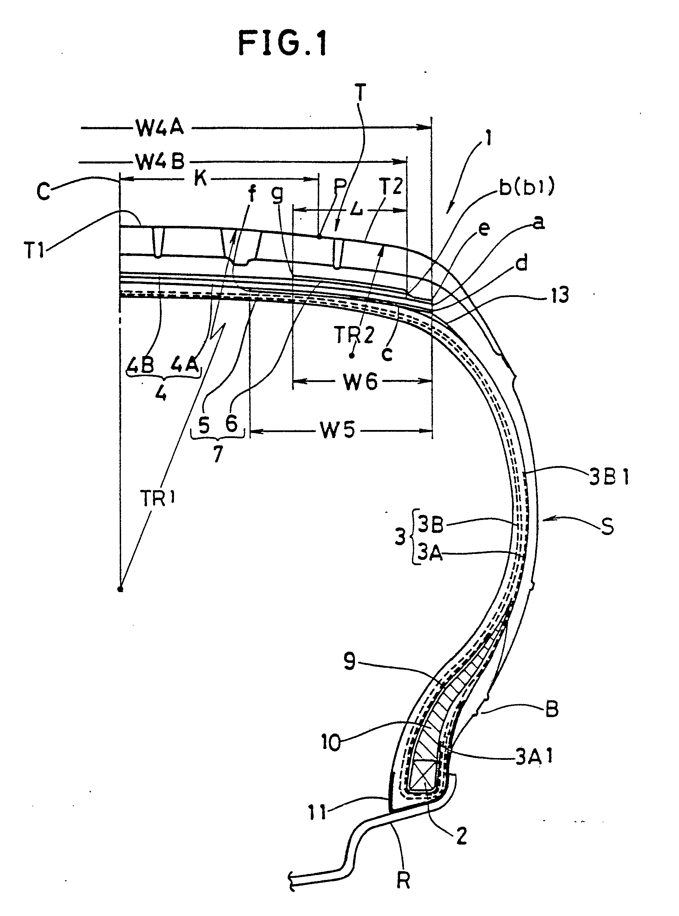

Fig.1. is a sectional view showing an embodiment of the present invention:

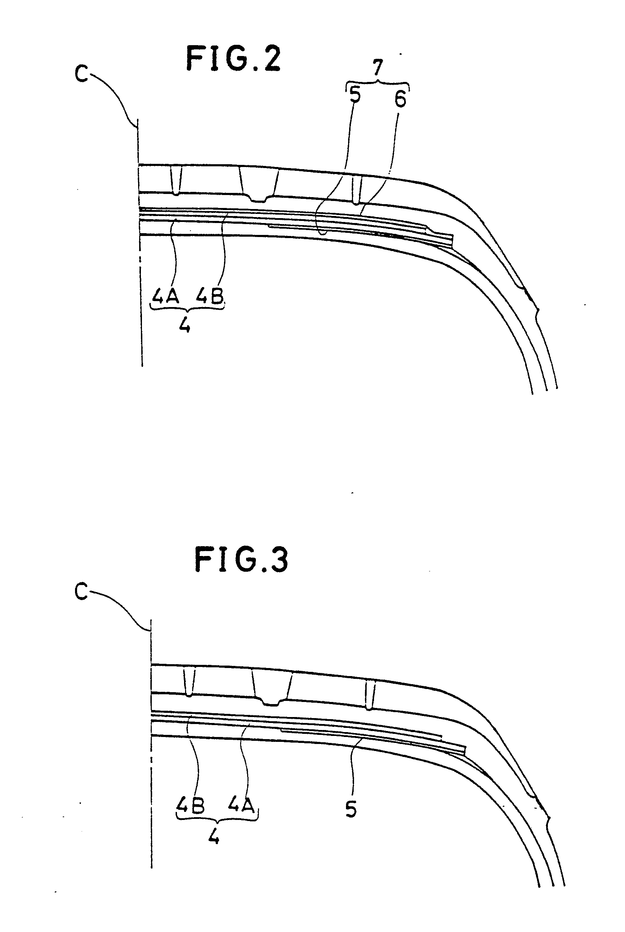

Figs.2 and 3 are sectional views each showing another embodiment of the invention.
Figs.4 to 9 are diagrams showing examples according to the prior art and

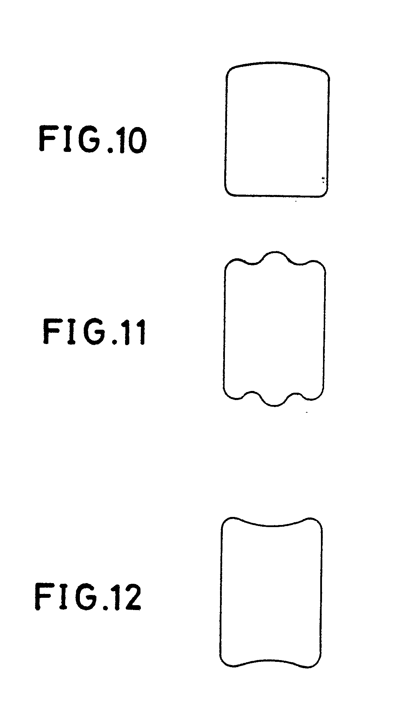

Figs.10 to 12 are diagrams showing the shape ground contacting region.

In Fig.1 a pneumatic tyre 1 has a tread portion T sidewall portions S extending inwardly one from each tread edge, and bead portions B located on the radially inward ends of the sidewall portions. The tyre is provided with a carcass 3 turned up around bead cores 2 from the inside to the outside of the tyre and a belt 4 disposed radially outside the carcass 3. The belt 4 has over it a band 7 comprising an inner band 5 located between the carcass 3 and the belt 4, and an outer band 6 disposed radially outside the belt 4.

The carcass 3 comprises two reinforcement plies 3A and 3B turned up around the bead cores 2. The end 3A1 of the axially inner turned up portion is terminated just above the bead core 2, and the end 3B1 of the axially outer turned up portion extends to the largest width point of the tyre.

The carcass 3 has a radial structure in which the carcass cords are arranged at 60 to 90 degrees to the tyre equator C. For the carcass cords, steel cords, organic fibre cords such as nylon, rayon, polyester or the like can be used.

Each bead portion is provided with a rubber bead apex 10 to increase the lateral stiffness.

The bead apex 10 is disposed between the turned up portion and the main portion of the carcass 3, is tapered and extends radially outwardly from the bead core 2.

Furthermore, in each bead portion B, a reinforcing layer 9 is disposed between the carcass 3 and the bead core 2, and this reinforcing layer 9 extends radially outwardly along the main portion and turned up portions of the carcass 3. The reinforcing layer 9 not only prevents abrasion between the bead core 2 and the carcass cords which move on the bead core 2 during the deformation of the tyre, and also raises the bead stiffness.

Each bead portion B is provided with a rim chafer 11 extending along the outside of the bead to prevent wear by the rim.

The above mentioned belt 4 comprises two plies 4A and 4B. The width W4A of the inner belt ply 4A nearest to the carcass 3 is 1.01 to 1.20 times the width W4B of the outer belt ply 4B. This prevents an abrupt change in stiffness which results if the axially outer edges a and b of the belt plies 4A and 4B coincide with each other in the axial direction. Accordingly, the belt plies 4A and 4B overlap between the edges b, and the edge b becomes the start point b1 of the above mentioned overlap on the shoulder side.

The belt plies, 4A, 4B are made of steel cords arranged at about 10 to 30 degrees to the tyre equator with the inner and outer belt plies 4A and 4B inclined in opposite directions with respect to the tyre equator, thereby improving the uniformity of the tyre.

As an alternative it is possible to form the outer belt ply 4B wider than the inner ply 4A.

The inner belt ply 4a contacts the carcass 3 axially inwards of a point C and is separated from the carcass 3 axially outwards of the point C. In the separated part, a breaker cushion 13 is inserted at the edge portion of the belt 4. The breaker cushion 13 is made of soft rubber and has a triangular cross sectional shape extending axially outwardly from the separating part along the carcass 3.

The inner band 5 is mounted so that the axially outer edge d thereof substantially coincides with the outer edge a of the widest belt ply, the inner belt ply 4A in this case. Here, the expression "substantially coincides with "means that the outer edge d of the inner band 5 is not disposed axially inwards of the outer edge a of the belt ply 4A, but just coincides with said outer edge a or projects outwards from the outer edge a by a distance not exceeding 8mm or more preferably 5mm.

The inner band 5 contacts the radially inner surface of the inner belt ply 4A, so that its end is pinched between the belt ply 4A and the breaker cushion 13.

The width W5 of the inner band 5 is in the range of 15 to 40% of the widest width W4 of the belt 4, or the width W4A of the inner belt ply in this embodiment.

The outer band 6 has its axially outer edge e substantially coinciding with the outer edge d of the inner band 5. The outer band 6 covers the outer surface of the edge portion of the outer belt ply 4B.

The width W6 thereof is in the range of 15 to 40% of the width W4A of the belt ply 4A, and equal to or shorter than the width W5 of the inner band 5.

The inner band 5 and the outer band 6 are composed of organic fibre cords, and comparatively high extensible fibre such as nylon and rayon are used for the organic fibre material. This makes it possible to follow the extension and compression of the belt 4 when the tyre is deformed, and to prevent separation between the bands 5 & 6 and the belt 4.

The band cords are arranged substantially parallel to the tyre equator C at 0 to 4 degrees more preferably 0 to 2 degrees with respect to the tyre equator C.

The outer band 6 can be formed so as to cover the entire surface of the belt as shown in Fig.2. Alternatively the external band 6 may be eliminated as shown in Fig.3.

As described above, the pneumatic tyre 1 is provided between the carcass 3 and the belt 4 with the inner band 5 which is inclined at a small angle to the tyre equator and which is formed by using extensible band cords made of fibre. As a consequence, the tension acting on the carcass 3 is transmitted smoothly to the belt 4 through the internal band 5, which increases the tension of the belt 4. As a result, the stiffness in the shoulders is effectively increased, which contributes to an improvement in the steering stability of the tyre.

Furthermore, by providing the inner band 5 axially inside the belt 4, the stress concentration on the belt edge generated by tyre rotation is released and rubber separation is prevented.

Further, by the fact that the outer edge d of the inner band 5 substantially coincides with the outer edge a of the inner belt ply 4A, the stress concentration on the edge d is reduced, and this helps to prevent separation. therefore, the durability of the tyre at high speed is improved.

By disposing the edge portion of the inner band 5 between the belt 4 and the breaker cushion 13, the buffer effect of the inner band 5 is improved by means of the breaker cushion 13, and the effect of preventing separation is greatly increased.

The outer band 6, covering the edge of the belt 4 as shown in Fig.1 together with the inner band 5, reduces the difference in stiffness generated between the belt edge portions and the crown portion when a plurality of edge bands B are used as shown in Fig.5. This results in not only on even a ground pressure distribution but also upgrades the steering stability at high speed, and distributes wear evenly.

When the outer band 6 covers the entire width of the belt 4 as shown un Fig.2, rubber separation at the belt edge is prevented in co-operation with the inner band 5, and by contrast from the case shown in Fig.8 of two bands C, the stiffness of the belt 4 can be transmitted to the tread, and the stiffness of the tread is prevented from decreasing with the result that the steering stability at high speed is maintained.

The width of the inner band 5 is set in a range of 15 to 40% of the width W4A of the widest belt ply 4A. When the outer band 6 is used, the width W6 thereof is preferably set in the same range but shorter than the width W 5 of the inner band 5.

If the width W5 of the inner band is less than 15% the effect to prevent belt edge separation becomes poor. A width of more than 40% is needless from the view point of the separation preventing function, and it is preferable to remain in the region where the belt 4 directly contacts the carcass 3 to transmit the tension of the carcass 3 to the belt 4.

Moreover when the width W6 of the outer band 6 is less than 15% the preventing function is insufficient. Also it is unnecessary to exceed 40%.

The reason why the width W6 of the outer band 6 is set less than the width W5 of the internal band 5 is to prevent the generation of an abrupt change in the stiffness caused by coincidence of the inner edges f and g in the widthwise direction. It is apparent from the view point of the prevention of separation from rubber that the function can be exerted if the outer band 6 is formed narrower.

It is also possible to form the outer band 6 wider as shown in Fig.2.

As shown in Fig.1 the tyre 1 is mounted on its regular rim R and inflated to 5% of the standard pressure specified for the tyre, that is, 5% pressure. Under this condition, the tread face is composed of an internal arc portion T1 forming the tread crown, and external arc portions T2 forming the tread shoulders. The internal arc portion T1 is provided with a radius of curvature TR1 having a centre on the tyre equator C. The external arc portion T2 are provided with a radius of curvature TR2.

The ratio TR2/TR1 is set to be in a range from 0.15 to 0.45, more preferably from 0.20 to 0.35 when the tyre is inflated to 5% pressure.

By arranging the inner band 6 at the belt edge portion, the stiffness at the shoulder part is increased, and the amount of swelling at the shoulder part, that is, the outward movement of the external arc portion T2 upon tyre inflation is decreased. Accordingly, the amount of swelling at the crown part, that is, the internal arc portion T1 becomes relatively large. As a result, the radius of curvature TR1 at this part is reduced, and the ground pressure distribution of the tread tends to be uneven. In order to prevent such a phenomenon, by setting the ratio TR2/TR1 of the radii at 5% pressure in the above range to set the radius of curvature TR1 of the internal arc portion T1 larger than the radius of curvature TR2 of the external arc portion T2 within the limit of the above range, the tread profile is kept optimum when inflated, and the ground pressure distribution is equalised.

This works effectively in low aspect ratio tyres having a very low aspect ratio.

The boundary points P between the internal arc portion T1 and the external arc portions T2 are located in such a range L as extending axially outwards of the axially inward edge f of the inner band 5 and axially inwards of the axially outward start point b1 of the overlap region where the belt plies 4A and 4B overlap, and K is the distance from the tyre equator C.

The start point b1 indicates the position where at least two belt plies start overlapping, even if the belt 4 is composed of three or more belt plies. By designing in this way, the point P as an inflexion point is located in the range L where the stiffness is relatively high, and as a result, excessive change of curvature at the point P is prevented, thereby smoothing the tread profile and assisting evenness of the ground pressure.

Tyres of 195/60R14 having the structure shown in Figs.1. and 3 were experimentally manufactured as Working Examples tyres 1 to 6 according to the sizes and specifications given in Table 1.

Tyres shown in Table 2 as references 1 to 10 were also produced. Then their high speed durability, steerability at high speed and wear resistance were compared. Furthermore, the shape of the ground contacting region was measured. here, the steel belt ply in each tyre was inclined at an angle of 10 degrees.

The data for the durability test obtained by the step speed test of ECE 30 are shown in Tables 1 and 2. The Examples 1 to 6 were superior to References 8 to 10 using no inner band. The Reference 7 in which aromatic polyamide cords were used for the band was broken at a low speed.

Each tyre was then mounted on a 1500cc front wheel drive passenger car, and the steerability was measured by a feel test. The obtained data were evaluated in three ranks. The test was executed while driving zigzag on a flat road surface at a speed of 80 km/h.

The wear status was examined by field car tests.

On the wear status, the uniformity of wearing was checked, and all the tyres were evaluated in ten ranks after driving 3000 km at a rated load. Larger scores indicate the superior state in wear resistance.

The Examples tyres had less uneven wear in comparison with the reference tyres, and they were worn evenly. It is considered that such preferable data was obtained in the Example tyres on the basis of the superior shape of the ground contacting region and uniform distribution of the ground pressure, as shown schematically in Fig.10 (for Example 3), Fig.11 (for Reference 7) and Fig.12 (for Reference 8).

Table 1

| Structure | Ex.1 | Ex.2 | Ex.3 | Ex.4 | Ex.5 | Ex.6 |
|---|---|---|---|---|---|---|
| | Fig.1 | Fig.1 | Fig.1 | Fig.3 | Fig.3 | Fig.3 |
| Inner band cord | | | | | | |
| Material | Nylon 6.6 | Nylon 6.6 | Polyester | Nylon 6.6 | Nylon 6.6 | Polyester |
| Thickness | 840d/2 | 1260d/2 | 1000d/2 | 840d/2 | 1260d/2 | 1000d/2 |
| Inclination (deg) | 0 | 0 | 0 | 0 | 0 | 0 |
| Outer band cord | | | | | | |
| Material | Nylon 6.6 | Nylon 6.6 | Polyester | | | |
| Thickness | 840d/2 | 1260d/2 | 1000d/2 | | | |
| Inclination (deg) | 0 | 0 | 0 | | | |
| Radius TR1 (mm) | 860 | 860 | 860 | 820 | 820 | 820 |
| Radius TR2 (mm) | 185 | 185 | 185 | 230 | 230 | 230 |
| Ratio TR2/TR1 | 0.215 | 0.215 | 0.215 | 0.280 | 0.280 | 0.280 |
| Distance K of boundary point (mm) | 45 | 45 | 45 | 32 | 32 | 32 |
| High speed durability ECE 30 (km/h) | 230 | 250 | 250 | 220 | 240 | 230 |
| High speed steering stability | 4 | 4 | 4 | 4.5 | 4.5 | 4.5 |
| Wear evenness | 10 | 9 | 9 | 10 | 9 | 9 |

Table 2

| | Ref.1 | Ref.2 | Ref.3 | Ref.4 | Ref.5 | Ref.6 |
|---|---|---|---|---|---|---|
| Structure | Fig.1 | Fig.1 | Fig.1 | Fig.3 | Fig.3 | Fig.3 |
| Inner band cord | | | | | | |
| Material | Nylon 6.6 | Nylon 6.6 | Polyester | Nylon 6.6 | Nylon 6.6 | Polyester |
| Thickness | 840d/2 | 1260d/2 | 1000d/2 | 840d/2 | 1260d/2 | 1000d/2 |
| Inclination (deg) | 0 | 0 | 0 | 0 | 0 | 0 |
| Outer band cord | | | | | | |
| Material | Nylon 6.6 | Nylon 6.6 | Polyester | | | |
| Thickness | 840d/2 | 1260d/2 | 1000d/2 | | | |
| Inclination (deg) | 0 | 0 | 0 | | | |
| Radius TR1 (mm) | 450 | 450 | 450 | 450 | 450 | 450 |
| Radius TR2 (mm) | 450 | 450 | 450 | 450 | 450 | 450 |
| Ratio TR2/TR1 | 1.0 | 1.0 | 1.0 | 1.0 | 1.0 | 1.0 |
| Distance K of boundary point (mm) | | | | | | |
| High speed durability ECE 30 (km/h) | 230 | 250 | 250 | 220 | 240 | 230 |
| High speed steering stability | 3.5 | 3.5 | 3.5 | 4 | 4 | 4 |
| Wear evenness | 7 | 6 | 6 | 8 | 7 | 7 |

Table 2 Continued

| | | Ref.7 | Ref.8 | Ref.9 | Ref.10 |
|---|---|---|---|---|---|
| Structure | | Fig.1 | Fig.4 | Fig.5 | Fig.8 |
| Inner band cord | | | | | |
|   Material | | Note 1 | | | |
|   Thickness | | 1500d/2 | | | |
|   Inclination | (deg) | 0 | | | |
| Outer band cord | | | | | |
|   Material | | Note 1 | Nylon 6.6 | Nylon 6.6 | Nylon 6.6 |
|   Thickness | | 1500d/2 | 840d/2 | 840d/2 | 840d/2 |
|   Inclination | (deg) | 0 | 0 | 0 | 0 |
| Radius TR1 | (mm) | 450 | 450 | 450 | 450 |
| Radius TR2 | (mm) | 450 | 450 | 450 | 450 |
| Ratio TR2/TR1 | | 1.0 | 1.0 | 1.0 | 1.0 |
| Distance K of boundary point | (mm) | | | | |
| High speed durability ECE 30 | (km/h) | 210 Note 2 | 220 | 240 | 240 |
| High speed steering stability | | 2.5 | 3.5 | 3 | 3 |
| Wear evenness | | 5 | 7 | 6 | 8 |

(Note 1)   Aromatic polyamide fiber (aramid) was used.
(Note 2)   The stiffness was so large that the crown part was broken.

As described above, in the pneumatic tyre of this invention, the inner band, composed of extensible organic fibre cords, is disposed between the carcass and the belt, and the band cords are laid substantially parallel to the tyre equator, whereby the separation of the belt edge form the surrounding rubber can be effectively prevented while keeping or improving the steering stability at high speed, and also the high speed durability can be improved.

In addition, since both the ratio of radii of curvature of the internal and external arc portions of the tread face and the position of the boundary points are set in the appropriate ranges, respectively, the ground pressure distribution is made even, thereby preventing the tread from uneven wear.

**Claims**

1. A pneumatic tyre comprising a tread portion (T), a pair of sidewall portions (S) extending radially inwardly one from each edge of the tread portion (T), a bead portion (B) located at the radially inner end of each sidewall portion (S) and having a bead core (2) extending therethrough, a toroidal carcass (3) turned up around the bead cores (2) to secure both edges thereof, a belt composed of plural plies (4A,4B) of steel cords disposed radially outside the carcass (3) characterised by an inner band (5) composed of extensible organic fibre cords arranged substantially parallel to the tyre equator and disposed between the carcass (3) and the belt (4) with the axially outer edge (d) of the inner band (5) and the outer edge (a) of the belt ply (4A) having the largest width being substantially aligned, the tread portion (T) is provided with a tread face comprising an internal arc portion (T1) having a radius of curvature (TR1) defining a tread crown and external arc portions (T2) each having a radius of curvature TR2 defining tread shoulders, the ratio TR2/TR1 of the radius of curvature TR2 to the radius of curvature TR1 being in a range from 0.15 to 0.45 when the tyre is mounted on its regular rim (R) and inflated to 5% of the standard internal pressure,

7

boundary points (P) between the internal arc portion (T1), and each external arc portion (T2) located between the axially inner edge (f) of the inner band (5) and the axially outward start point (b), of the overlap area where at least two belt plies (4A, 4B) overlap in the axial direction of the tyre.

# FIG.1

# FIG.2

# FIG.3

FIG.4

FIG.5

FIG.6

FIG.7

FIG.8

FIG.9

FIG.10

FIG.11

FIG.12

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | GB-A-2 005 201 (BRIDGESTONE)<br>* Page 1, line 39 - page 2, line 23; figure 2 *<br>--- | 1 | B 60 C 9/20<br>B 60 C 3/04 |
| P,Y | EP-A-0 295 898 (SUMITOMO RUBBER INDUSTRIES)<br>* Claim 2 *<br>--- | 1 | |
| A | BE-A- 776 102 (PIRELLI)<br>* Page 3, last paragraph - page 6, prelast paragraph; figures 3,4 *<br>--- | 1 | |
| A | LU-A- 62 689 (MICHELIN)<br>* Claims 1,3; figures 1,2 *<br>--- | 1 | |
| A | EP-A-0 016 229 (TOYO RUBBER INDUSTRY)<br>* Claim 1 *<br>--- | 1 | |
| A | FR-A-2 513 187 (CONTINENTAL GUMMI-WERKE)<br>--- | | |
| A | FR-A-2 421 073 (CONTINENTAL GUMMI-WERKE)<br>----- | | TECHNICAL FIELDS SEARCHED (Int. Cl.4)<br><br>B 60 C |

The present search report has been drawn up for all claims

| Place of search | Date of completion of the search | Examiner |
|---|---|---|
| THE HAGUE | 05-09-1989 | THEODORIDOU E. |